# EUROPÄISCHE PATENTSCHRIFT

(11) **EP 3 867 960 B1**
(45) Veröffentlichungstag und Bekanntmachung des Hinweises auf die Patenterteilung: **26.07.2023**
(21) Anmeldenummer: 19783331.2
(22) Anmeldetag: 10.10.2019
(51) Int. Cl.: H01M 50/528, H01M 50/581

(54) **POUCHZELLE**
POUCH CELL
ÉLÉMENT À POCHE

(30) Priorität: 17.10.2018 EP 18200867
(43) Veröffentlichungstag der Anmeldung: 25.08.2021
(73) Patentinhaber: Hilti Aktiengesellschaft, 9494 Schaan (LI)
(72) Erfinder: MARTINY, Nora, 82211 Herrsching-Breitbrunn (DE); LEPIORZ, Matthias, 09112 Chemnitz (DE); ZIEGLER, Bernd, 86830 Schabmünchen (DE); SAX, Kathrin, 86937 Scheuring (DE); STANGER, Robert, 87600 Kaufbeuren (DE); ENDER, Moses, 9470 Buchs (CH); HAUSER, Klaus, 86830 Schwabmünchen (DE)
(74) Vertreter: Hilti Aktiengesellschaft Corporate Intellectual Property
(86) Internationale Anmeldenummer: PCT/EP2019/077467
(87) Internationale Veröffentlichungsnummer: WO 2020/078819

(56) Entgegenhaltungen:
- EP-A1- 3 258 520
- JP-A- 2017 139 128
- US-A1- 2010 047 674

## Beschreibung

Die vorliegende Erfindung betrifft eine Pouchzelle mit wenigstens einer Anschlusselektrode, über die die Pouchzelle elektrisch kontaktiert werden kann. Des Weiteren betrifft die vorliegende Erfindung einen Akkupack mit einer Pouchzelle mit wenigstens einer Anschlusselektrode, über die die Pouchzelle elektrisch kontaktiert werden kann. Darüber hinaus betrifft die vorliegende Erfindung eine elektrische Handwerkzeugmaschine mit einem Akkupack mit einer Pouchzelle mit wenigstens einer Anschlusselektrode, über die die Pouchzelle elektrisch kontaktiert werden kann.

Pouchzellen an sich sowie als Bestandteil eines Akkumulators (auch Akku genannt) der eingangs genannten Art sind grundsätzlich aus dem Stand der Technik bekannt. Die Patentanmeldung US 2010/047674 A1 offenbart eine Pouchzelle mit einem Überhitzungsschutz, welcher ein Material mit negativem Wärmeausdehnungskoeffizienten beinhaltet. Die Patentanmeldung EP 3 258 520 A1 offenbart eine Pouchzelle mit einem Überhitzungsschutz, welcher einen Bimetallstreifen beinhaltet und die Stromentnahme über die Anschlusselektrode unterbricht. Ebenfalls aus dem Stand der Technik bekannt ist das Phänomen einer erhöhten Pouchzellentemperatur während einer Stromzufuhr sowie während einer Stromentnahme. Der Vorgang der Stromzufuhr kann auch als Laden bzw. Ladevorgang bezeichnet werden. Der Vorgang der Stromentnahme kann auch als Entladen im Zuge einer Geräteversorgung bezeichnet werden.

Wenn die Pouchzellentemperatur eine kritische Temperaturschwelle überschreitet, kann es - typischerweise bedingt durch das sogenannte Swelling - zu einem Aufplatzen einer Außenhülle der Pouchzelle kommen. Das Swelling kann auch als Aufquellen bzw. Aufblähen der Pouchzelle bezeichnet werden.

Es ist Aufgabe der vorliegenden Erfindung eine Pouchzelle, einen Akkupack mit eine Pouchzelle sowie eine elektrische Handwerkzeugmaschine mit einem Akkupack mit einer Pouchzelle zu schaffen, der die Grundlage für eine erhöhte Betriebssicherheit bietet.

Die Erfindung wird durch eine Pouchzelle entsprechend dem Anspruch 1 gelöst, wobei die Pouchzelle einen Stromunterbrecher aufweist, der ausgebildet ist, durch eine thermisch induzierte Änderung seiner geometrischen Abmessung eine Stromentnahme über die Anschlusselektrode zumindest zeitweise zu unterbrechen.

Dier Erfindung schließt die Erkenntnis ein, dass akkubetriebene Handwerkzeugmaschinen immer leistungsstärker leistungsfähiger werden und aus Zulassungsgründen die Spannung von Handwerkzeugmaschinen derzeit i. d. R. auf maximal 60V begrenzt sind. Um dennoch hohe Leistungen realisieren zu können, muss der Strom eines Versorgungsakkus erhöht werden. Hier bieten Pouchzellen aufgrund ihres deutlich geringeren internen Widerstands gegenüber zylindrischen Zellen große Vorteile. Pouchzellen ermöglichen prinzipbedingt deutlich höhere Ströme bei geringerer Erwärmung der Zellen. Ein Nachteil der Pouchzellen gegenüber zylindrischer Zellen ist, dass bisher keine Eigensicherheit eingebaut werden kann.

Mit anderen Worten sind keine zufriedenstellenden passiven Sicherheitssysteme für Pouchzellen bekannt, die im Falle einer Störung (d.h. Aufquellen der Außenhülle der Pouchzelle) ein Aufplatzen der Außenhülle verhindern. Es wurde in diesem Zusammenhang beobachtet, dass selbst bei einer aufgeplatzten Außenhülle immer noch eine gewisse ionische Leitfähigkeit sowie ein Elektronenfluss an den Pouchzellen besteht. Somit kann es mit einer geplatzten Außenhülle zu einem weiteren Laden bzw. Überladen der Pouchzelle kommen, wodurch ein weiteres Erhitzen der Pouchzelle bedingt wird.

Durch den bereitgestellten Stromunterbecher in der erfindungsgemäßen Pouchzelle wird eine Grundlage geschaffen diese Nachteile des Standes der Technik zu vermeiden oder zumindest zu verringern. Durch eine thermisch induzierte Änderung der geometrischen Abmessung des Stromunterbrechers wird eine Stromentnahme über die Anschlusselektrode zumindest zeitweise unterbrochen, wodurch ein weiteres Laden bzw. Überladen der Pouchzelle verhindert wird. Durch den erfindungsgemäß vorgesehenen Stromunterbrecher, kann ist ein auf Pouchzellen basierender Akkupack besonders betriebssicher.

Erfindungsgemäß weist der Stromunterbrecher ein Material mit negativen Wärmeausdehnungskoeffizienten auf. Die thermisch induzierte Änderung der geometrischen Abmessung des Stromunterbrechers wird erfindungsgemäß durch eine Änderung einer Pouchzellentemperatur bewirkt, wobei der Stromunterbrecher vorzugsweise thermisch mit der Pouchzelle gekoppelt ist. Der Stromunterbrecher kann lediglich zeitweise mit thermisch mit der Pouchzelle gekoppelt sein.

Erfindungsgemäß ist der Stromunterbrecher an der Anschlusselektrode angeordnet oder ist Teil der Anschlusselektrode.

An jeder Anschlusselektrode kann ein Stromunterbrecher vorgesehen sein. Es hat sich als vorteilhaft herausgestellt, wenn der Stromunterbrecher selbst ein Teil der Anschlusselektrode ist.

Erfindungsgemäß weist die Anschlusselektrode einen Innenanteil und einen Außenanteil auf, wobei der Innenanteil von einer Außenhülle der Pouchzelle umgeben ist und der Außenanteil zumindest abschnittsweise außerhalb dieser Außenhülle befindlich ist. Erfindungsgemäß sind der Innenanteil und der Außenanteil lagefest bezüglich der Außenhülle und/oder lagefest zueinander. Der Innenanteil kann vollständig von der Außenhülle umgeben sein. Der Außenanteil kann zumindest abschnittsweise und/oder zu einem geringen Anteil von der Außenhülle umgeben sein. Vorzugweise ist der Stromunterbrecher vollständig von der Außenhülle umgeben, besonders bevorzugt unabhängig von seinem Zustand. Vorzugsweise sind der Innenanteil und der Außenanteil elektrisch leitfähig, beispielsweise mit einer elektrischen Leifähigkeit größer als 1×10⁵ Siemens pro Meter. Besonders bevorzugt bestehen der Innenanteil und der Außenanteil aus Metall oder weisen ein solches auf. Besonders bevorzugt weist die Pouchzelle eine Aktivschicht auf, die mit dem Stromunterbrecher thermisch gekoppelt ist.

In einer weiteren bevorzugten Ausgestaltung ist der Stromunterbrecher im Sinne einer mechanischen und/oder elektrischen Reihenschaltung zwischen dem Innenanteil und dem Außenanteil angeordnet. Eine geometrische Verkürzung des Stromunterbrechers, bei einem Material mit negativen Wärme-ausdehnungskoeffizienten und steigender Pouchzellentemperatur, führt dann vorteilhafterweise zu einer mechanischen und/oder elektrischen Trennung zwischen dem Innenanteil und dem Außenanteil. Der Stromunterbrecher kann Teil eines Stromkreises sein, in den die Pouchzelle selbst elektrisch eingebunden ist, vorzugsweise in Reihenschaltung.

Erfindungsgemäß ist der Stromunterbrecher derart ausgebildet, dass eine Stromunterbrechung durch eine Wärmeschrumpfung des Materials bewirkt wird, insbesondere, wenn die Pouchzellentemperatur eine vorgegebene Temperaturschwelle überschreitet. Die vorgegebene Temperaturschwelle kann beispielsweise 60 Grad Celsius betragen.

In einer In einer weiteren bevorzugten Ausgestaltung weist das Material mit negativen Wärmeausdehnungskoeffizienten Zirconiumwolframat (ZrW₂O₈). Zur Erhöhung der elektrischen Leitfähigkeit kann das Material Metallpartikel enthalten, wie beispielsweise Nickel oder Kupfer. Es sind Composite-Materialien bekannt, beispielsweise auf Basis von Zirconiumwolframat und Nickel in Nanoform, die bei vergleichsweise hoher elektrischer Leitfähigkeit einen negativen Wärmeausdehnungskoeffizienten aufweisen. Es hat sich als vorteilhaft herausgestellt, wenn dass das Material eine elektrische Leifähigkeit größer als 1×10⁵ Siemens pro Meter aufweist.

In einer weiteren bevorzugten Ausgestaltung ist der Stromunterbecher ausgebildet die Anschlusselektrode reversibel zu unterbrechen, d.h. der Stromunterbecher lässt einen Stromfluss durch die Anschlusselektrode erneut zu, wenn die Pouchzellentemperatur die vorgegebene Temperaturschwelle unterschreitet. Alternativ der Stromunterbecher ausgebildet sein bei erstmaligem Überschreiten der Temperaturschwelle die Stromentnahme über die Anschlusselektrode dauerhaft zu unterbrechen, beispielsweise durch ein mechanisches Abreißen des Stromunterbechers vom Innenanteil und/oder vom Außenanteil der Elektrode.

Die Erfindung wird ebenfalls gelöst durch ein Akkupack mit einer oder mehreren Pochzellen der vorbeschriebenen Art. Die Erfindung wird ebenfalls gelöst durch eine elektrische Handwerkzeugmaschine mit einem Akkupack der vorbeschriebenen Art. Der Akkupack des Systems aus Handwerkzeugmaschine und Akkupack kann mit Bezug auf die vorbeschriebenen Merkmale vorteilhaft weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1a: ein erstes bevorzugtes Ausführungsbeispiel einer erfindungsgemäßen Pouchzelle mit Stromunterbecher;
- Figur 1b: eine schematische Darstellung einer Handwerkzeugmaschine mit einem Akkupack und einer Pouchzelle;
- Figur 2: die Pouchzelle der Figur 1 bei unterschrittener Temperaturschwelle (A) und überschrittener Temperaturschwelle (B);
- Figur 3: ein zweites bevorzugtes Ausführungsbeispiel einer erfindungsgemäßen Pouchzelle bei unterschrittener Temperaturschwelle; und
- Figur 4: das Ausführungsbeispiel der Figur 3 bei überschrittener Temperaturschwelle.

### Ausführungsbeispiele:

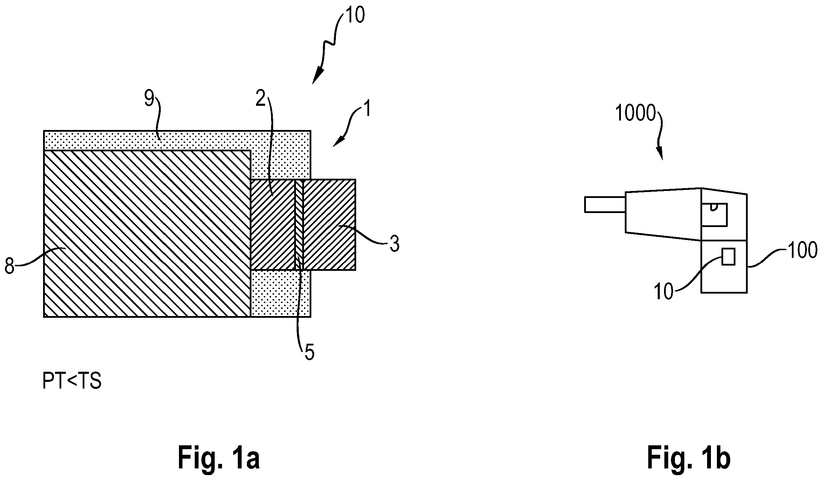

Ein erstes bevorzugtes Ausführungsbeispiel einer erfindungsgemäßen Pouchzelle 10 ist in Figur 1a dargestellt. Die Pouchzelle 10 verfügt über eine Anschlusselektrode 1 über die die Pouchzelle 10 elektrisch kontaktiert werden kann. Genauer gesagt ist die Anschlusselektrode 1 elektrisch mit einer Aktivschicht 8 der Pouchzelle 10 verbunden. Die Aktivschicht 8 ist vollständig von einer Außenhülle 9 der Pouchzelle 10 umgeben.

Die Anschlusselektrode 1 weist einen Innenanteil 2 und einen Außenanteil 3 auf, wobei der Innenanteil 2 vollständig von der Außenhülle 9 der Pouchzelle 10 umgeben ist und der Außenanteil 3 überwiegend außerhalb dieser Außenhülle 9 befindlich ist.

Die Pouchzelle 10 weist einen Stromunterbrecher 5 aufweist, der ausgebildet ist, durch eine thermisch induzierte Änderung seiner geometrischen Abmessung eine Stromentnahme über die Anschlusselektrode 1 zumindest zeitweise zu unterbrechen. Im vorliegend dargestellten Ausführungsbeispiel ist der Stromunterbrecher 5 Teil der Anschlusselektrode 1, wobei der Stromunterbrecher 5 im Sinne einer mechanischen und elektrischen Reihenschaltung zwischen dem Innenanteil 2 und dem Außenanteil 3 befindlich ist.

Der Innenanteil 2 und der Außenanteil 3 sind jeweils lagefest bezüglich der Außenhülle 9 in die Außenhülle eingebunden, beispielsweise durch einschweißen. Weiterhin sind der Innenanteil 2 und der Außenanteil 3 lagefest zueinander angeordnet. Dies gilt insbesondere für die einander nächstliegenden Abschnitte des Innenanteils 2 und des Außenanteil 3. Der Begriff "lagefest" berücksichtigt eine gewisse Eigenflexibilität der Pouchzelle 10.

Im vorliegend dargestellten Ausführungsbeispiel weist der Stromunterbrecher 5 ein Material mit negativen Wärmeausdehnungskoeffizienten aufweist, beispielhaft Zirconiumwolframat. Im Material sind Nickelkomponenten eingelagert, so dass das Material neben einem negativen Wärmeausdehnungskoeffizienten auch eine elektrische Leifähigkeit größer als 1×10⁵ Siemens pro Meter aufweist.

In Figur 1a unterschreitet eine Pouchzellentemperatur PT eine vorgegebene Temperaturschwelle TS, wobei die vorgegebene Temperaturschwelle beispielhaft 60 Grad Celsius beträgt. In diesem Zustand sind der Innenanteil 2 und der Außenanteil 3 über den Stromunterbrecher 5 elektrisch kontaktiert, so dass die Pouchzelle 10 geladen oder entladen werden kann.

In Figur 1b ist schematisch eine elektrische Handwerkzeugmaschine 1000 dargestellt, die über einen Akkupack 100 versorgt wird, wobei der Akkupack mit wenigstens einer Pouchzelle 10 ausgestattet ist.

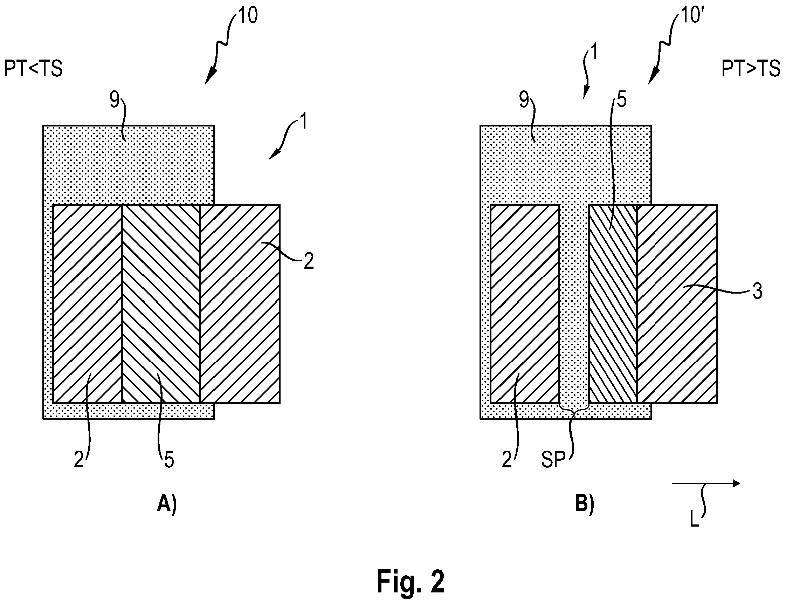

Figur 2 A zeigt einen Ausschnitt der Pouchzelle der Figur 1a, wobei wie in Figur 1a die Pouchzellentemperatur PT die vorgegebene Temperaturschwelle TS unterschreitet. Somit sind der Innenanteil 2 und der Außenanteil 3 über den Stromunterbrecher 5 elektrisch kontaktiert.

Eine Stromunterbrechung soll nun mit Bezug auf Figur 2 B genauer erläutert werden. Der Stromunterbrecher 5 weist wie bereits erwähnt ein Material mit negativen Wärmeausdehnungskoeffizienten auf. Durch eine Änderung der Pouchzellentemperatur PT wird eine Änderung der geometrischen Abmessung des Stromunterbrecher 5 bewirkt. Dadurch, dass der Innenanteil 2 aus Metall besteht, sind der Innenanteil 2 und der Stromunterbrecher 5 thermisch gekoppelt, so dass der Stromunterbrecher 5 über den Innenanteil 2 eine Temperaturerhöhung der Aktivschicht 8 erfährt.

Im dargestellten Ausführungsbeispiel wird die Stromunterbrechung durch eine Wärmeschrumpfung des Materials bewirkt, wenn die Pouchzellentemperatur PT eine vorgegebene Temperaturschwelle TS überschreitet. Wie aus der Figur 2B) ersichtlich ist, handelt es sich bei der Änderung der geometrischen Abmessung des Materials um eine Verkürzung des Materials des Stromunterbrechers 5 in Längsrichtung L. Da der Innenanteil 2 und der Außenanteil 3 lagefest bezüglich der Außenhülle 9 und lagefest zueinander sind, bewirkt ein Schrumpfen des Stromunterbrechers 5 in Längsrichtung L - hier angedeutet durch einen gebildeten Spalt SP - ein elektrisches Trennen des Außenanteil 3 vom Innenanteil 2. Die Pouchzelle 10' in überhöhtem Temperaturzustand kann somit weder weiter geladen noch entladen werden.

Der Stromunterbrecher 5 ist vorliegend ausgebildet ist, du eine Stromentnahme über die Anschlusselektrode 1 reversibel zu unterbrechen. Wenn die Pouchzellentemperatur PT eine vorgegebene Temperaturschwelle TS überschreitet ist ein Stromfluss erneut möglich, vgl. Figur 2B.

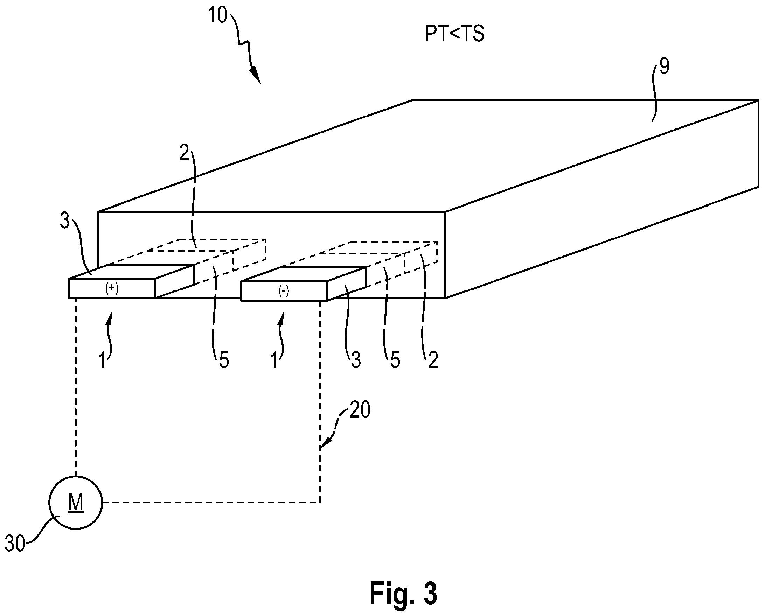

Figur 3 zeigt ein zweites bevorzugtes Ausführungsbeispiel einer erfindungsgemäßen Pouchzelle 10 in perspektivischer Darstellung. Die Pouchzelle 10 weist zwei Anschlusselektroden 1 in Form eine Pluselektrode und einer Minuselektrode auf, über die die Pouchzelle 10 jeweils elektrisch kontaktiert werden kann.

Die Anschlusselektroden 1 weisen jeweils einen Innenanteil 2 und jeweils einen Außenanteil 3 auf, wobei die Innenanteil 2 vollständig von der Außenhülle 9 der Pouchzelle 10 umgeben sind (gestrichelte Darstellung). Die jeweiligen Außenanteile 3 liegen überwiegend außerhalb dieser Außenhülle 9.

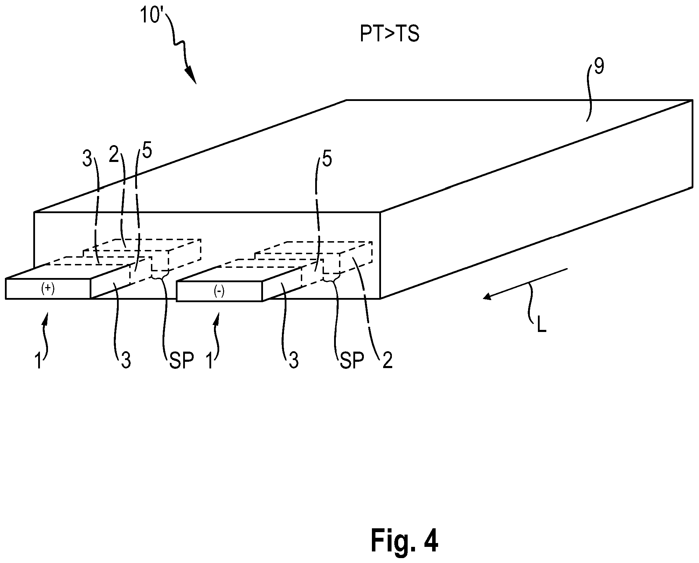

Jede der Anschlusselektroden 1 weist einen Stromunterbrecher 5 mit einem Material mit negativen Wärmeausdehnungskoeffizienten aufweist, so dass, wenn die Pouchzellentemperatur PT eine vorgegebene Temperaturschwelle TS überschreitet (vgl. Figur 4) eine Stromunterbrechung durch eine Wärmeschrumpfung des Materials bewirkt wird.

Wie der Figur 3 entnommen werden kann, sind die Stromunterbrecher 5 Teil eines Stromkreises 20 ist, in den die Pouchzelle 10 selbst elektrisch in Reihenschaltung eingebunden. Der Stromkreis dient zu elektrischen Versorgung eines Elektromotors 30 einer hier nicht weiter dargestellten Handwerkzeugmaschine.

Eine Stromunterbrechung soll nun mit Bezug auf Figur 4 genauer erläutert werden. Die Stromunterbrecher 5 weisen wie bereits erwähnt ein Material mit negativen Wärmeausdehnungskoeffizienten auf. Durch eine Änderung der Pouchzellentemperatur PT wird eine Änderung der geometrischen Abmessung des Stromunterbrecher 5 bewirkt.

Wie aus der Figur 4 ersichtlich ist, handelt es sich bei der Änderung der geometrischen Abmessung des Materials um eine Verkürzung des Materials der Stromunterbrecher 5 in Längsrichtung L. Da der Innenanteil 2 und der Außenanteil 3 jeweils lagefest bezüglich der Außenhülle 9 und jeweils lagefest zueinander sind, bewirkt ein Schrumpfen der Stromunterbrecher 5 in Längsrichtung L - hier angedeutet durch einen jeweils gebildeten Spalt SP - ein elektrisches Trennen des jeweiligen Außenanteils 3 vom jeweiligen Innenanteil 2. Die Pouchzelle 10' in überhöhtem Temperaturzustand kann somit weder weiter geladen noch entladen werden.

### Bezugszeichenliste

- 1: Anschlusselektrode
- 2: Innanteil
- 3: Außenanteil
- 5: Stromunterbrecher
- 8: Aktivschicht
- 9: Außenhülle
- 10: Pouchzelle (Normaltemperatur)
- 10': Pouchzelle (Temperaturschwelle überschritten)
- 20: Stromkreis
- 30: Elektromotor
- 100: Akkupack
- 1000: Handwerkzeugmaschine

- L: Längsrichtung
- PT: Pouchzellentemperatur
- SP: Spalt
- TS: Temperaturschwelle

## Patentansprüche

1. Pouchzelle (10) mit wenigstens einer Anschlusselektrode (1) über die die Pouchzelle (10) elektrisch kontaktiert werden kann,
**dadurch gekennzeichnet, dass** die Pouchzelle (10) einen Stromunterbrecher (5) aufweist, der ausgebildet ist, durch eine thermisch induzierte Änderung seiner geometrischen Abmessung eine Stromentnahme über die Anschlusselektrode (1) zumindest zeitweise zu unterbrechen, wobei der Stromunterbrecher (5) ein Material mit negativen Wärmeausdehnungskoeffizienten aufweist und die thermisch induzierte Änderung seiner geometrischen Abmessung durch eine Änderung einer Pouchzellentemperatur (PT) bewirkt wird, wobei der Stromunterbrecher (5) an der Anschlusselektrode (1) angeordnet ist oder Teil der Anschlusselektrode ist, wobei der Stromunterbrecher (5) derart ausgebildet ist, dass eine Stromunterbrechung durch eine Wärmeschrumpfung des Materials bewirkt wird, insbesondere, wenn die Pouchzellentemperatur (PT) eine vorgegebene Temperaturschwelle (TS) überschreitet, wobei Anschlusselektrode (1) einen Innenanteil (2) und einen Außenanteil (3) aufweist, wobei der Innenanteil (2) vorzugsweise vollständig von einer Außenhülle (9) der Pouchzelle (10) umgeben ist und der Außenanteil (3) zumindest abschnittsweise außerhalb dieser Außenhülle (9) befindlich ist, und wobei der Innenanteil (2) und der Außenanteil (3) lagefest bezüglich der Außenhülle (9) und/oder lagefest zueinander sind.

2. Pouchzelle (10) nach Anspruch 1,
**dadurch gekennzeichnet, dass** der Stromunterbrecher (5) Teil eines Stromkreises (20) ist, in den die Pouchzelle (10) selbst elektrisch eingebunden ist, vorzugsweise in Reihenschaltung.

3. Pouchzelle (10) nach einem der vorangehenden Ansprüche,
**dadurch gekennzeichnet, dass** das Material Zirconiumwolframat aufweist.

4. Pouchzelle (10) nach einem der vorangehenden Ansprüche,
**dadurch gekennzeichnet, dass** das Material eine elektrische Leitfähigkeit größer als 1×10^5 Siemens pro Meter aufweist.

5. Pouchzelle (10) nach einem der vorangehenden Ansprüche,
**dadurch gekennzeichnet, dass** Stromunterbrecher (5) ausgebildet ist, eine Stromentnahme über die Anschlusselektrode (1) reversibel zu unterbrechen.

6. Akkupack (100) mit einer Pouchzelle (10) nach einem der vorangehenden Ansprüche.

7. Elektrische Handwerkzeugmaschine (1000) mit einem Akkupack (100) nach Anspruch 6.

## Claims

1. Pouch cell (10) having at least one connection electrode (1) via which the pouch cell (10) can be electrically contacted,
**characterized in that** the pouch cell (10) comprises a current interrupter (5) configured, by virtue of a thermally induced change in its geometric dimensioning, at least temporarily to interrupt drawing of current via the connection electrode (1), wherein the current interrupter (5) comprises a material having a negative coefficient of thermal expansion and the thermally induced change in its geometric dimensioning is brought about by a change in a pouch cell temperature (PT), wherein the current interrupter (5) is arranged at the connection electrode (1) or is part of the connection electrode, wherein the current interrupter (5) is configured in such a way that a current interruption is brought about by a thermal shrinkage of the material, particularly if the pouch cell temperature (PT) exceeds a predefined temperature threshold (TS), wherein the connection electrode (1) comprises an inner portion (2) and an outer portion (3), wherein the inner portion (2) is preferably completely surrounded by an outer enclosure (9) of the pouch cell (10) and the outer portion (3) at least in sections, is situated outside said outer enclosure (9), and wherein the inner portion (2) and the outer portion (3) are positionally fixed in relation to the outer enclosure (9) and/or positionally fixed with respect to one another.

2. Pouch cell (10) according to Claim 1,
**characterized in that** the current interrupter (5) is part of an electrical circuit (20) into which the pouch cell (10) itself is electrically integrated, preferably in series connection.

3. Pouch cell (10) according to either of the preceding claims,
**characterized in that** the material comprises zirconium tungstate.

4. Pouch cell (10) according to any of the preceding claims,
**characterized in that** the material has an electrical conductivity of greater than 1 × 10∧5 Siemens per meter.

5. Pouch cell (10) according to any of the preceding claims,
**characterized in that** the current interrupter (5) is configured to reversibly interrupt drawing of current via the connection electrode (1).

6. Rechargeable battery pack (100) having a pouch cell (10) according to any of the preceding claims.

7. Electrical hand-held power tool (1000) having a rechargeable battery pack (100) according to Claim 6.

## Revendications

1. Cellule formant poche (10) comprenant au moins une électrode de raccordement (1) par le biais de laquelle la cellule formant poche (10) peut être mise en contact électrique,
**caractérisée en ce que** la cellule formant poche (10) comporte un interrupteur de courant (5) qui est conçu pour interrompre au moins temporairement un prélèvement de courant sur l'électrode de raccordement (1) par une modification, induite thermiquement, de ses dimensions géométriques, l'interrupteur de courant (5) comportant un matériau à coefficient de dilatation thermique négatif et la modification, induite thermiquement, de ses dimensions géométriques étant provoquée par une variation de la température (PT) de la cellule formant poche, l'interrupteur de courant (5) étant disposé au niveau de l'électrode de raccordement (1) ou faisant partie de l'électrode de raccordement, l'interrupteur de courant (5) étant conçu de manière à provoquer une interruption de courant par rétraction thermique du matériau, en particulier si la température (PT) de la cellule formant poche devient supérieure à un seuil de température spécifié (TS), l'électrode de raccordement (1) comportant une partie intérieure (2) et une partie extérieure (3), la partie intérieure (2) étant entourée, de préférence complètement, par une enveloppe extérieure (9) de la cellule formant poche (10) et la partie extérieure (3) étant située au moins par portions à l'extérieur de cette enveloppe extérieure (9), et la partie intérieure (2) et la partie extérieure (3) étant en position fixe par rapport à l'enveloppe extérieure (9) et/ou en position fixe l'une par rapport à l'autre.

2. Cellule formant poche (10) selon la revendication 1, **caractérisée en ce que** l'interrupteur de courant (5) fait partie d'un circuit (20) dans lequel la cellule formant poche (10) elle-même est intégrée électriquement, de préférence dans un montage en série.

3. Cellule formant poche (10) selon l'une des revendications précédentes, **caractérisée en ce que** le matériau comporte du tungstate de zirconium.

4. Cellule formant poche (10) selon l'une des revendications précédentes, **caractérisée en ce que** le matériau a une conductivité électrique supérieure à 1×10^5 Siemens par mètre.

5. Cellule formant poche (10) selon l'une des revendications précédentes, **caractérisée en ce que** l'interrupteur de courant (5) est conçu pour interrompre de manière réversible un prélèvement de courant par le biais de l'électrode de raccordement (1).

6. Bloc-batterie (100) comprenant une cellule formant poche (10) selon l'une des revendications précédentes.

7. Machine-outil à main électrique (1000) comprenant un bloc-batterie (100) selon la revendication 6.
